(19)

Europäisches
Patentamt
European
Patent Office
Office européen
des brevets

(11)     **EP 1 830 427 B1**

(12)     **EUROPEAN PATENT SPECIFICATION**

(45) Date of publication and mention
of the grant of the patent:
**25.01.2012  Bulletin 2012/04**

(51) Int Cl.:
***H01M 8/04*** *(2006.01)*        ***H01M 8/10*** *(2006.01)*

(86) International application number:
**PCT/JP2005/020699**

(21) Application number: **05805952.8**

(22) Date of filing: **11.11.2005**

(87) International publication number:
**WO 2006/054489 (26.05.2006 Gazette 2006/21)**

(54) **CARTRIDGE FOR METHANOL FUEL CELL**

KASSETTE FÜR EINE METHANOL-BRENNSTOFFZELLE

CARTOUCHE POUR PILE A COMBUSTIBLE AU METHANOL

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **19.11.2004   JP 2004335472**

(43) Date of publication of application:
**05.09.2007   Bulletin 2007/36**

(73) Proprietors:
• **TOYO SEIKAN KAISHA, LTD.**
**Chiyoda-ku**
**Tokyo 100-8522 (JP)**
• **Kabushiki Kaisha Toshiba**
**Tokyo 105-8001 (JP)**

(72) Inventors:
• **IMODA, Daisuke,**
**c/o TOYO SEIKAN KAISHA, LTD.**
**Yokohama-shi, Kanagawa 230-0001 (JP)**

• **GOTOU, Hiroaki,**
**TOYO SEIKAN GROUP**
**Yokohama-shi, Kanagawa 230-0062 (JP)**
• **HASEBE, Hiroyuki,**
**c/o KABUSHIKI KAISHA TOSHIBA**
**Yokohama-shi, Kanagawa 235-8522 (JP)**

(74) Representative: **TBK**
**Bavariaring 4-6**
**80336 München (DE)**

(56) References cited:
**JP-A- 1 278 344        JP-A- 8 119 248
JP-A- 2003 317 755     JP-A- 2004 123 970
JP-A- 2004 127 659     JP-A- 2005 322 441
US-A1- 2005 058 874**

## Description

[Technical Field]

The present invention relates to a portable cartridge for a methanol fuel cell suitably used as a fuel tank, a refill container, or the like for a direct methanol fuel cell (DMFC).

[Background Art]

A direct methanol fuel cell (DMFC) employing methanol as a fuel has attracted attention as a power source for a mobile device such as a laptop computer or a cell phone, and various types thereof are known (see Patent Documents 1 to 3, for example).

For reduction in size of a cell in each of those fuel cells, reduction in size and weight of a fuel tank (cartridge) storing methanol as a fuel is required, and various cartridges are proposed (see Patent Documents 3 and 4, for example).

Patent Document 1: JP-A-2004-265872
Patent Document 2: JP-A-2004-259705
Patent Document 3: JP-A-2004-152741
Patent Document 4: JP-A-2004-155450

However, methanol has a low molecular weight, high permeability, and toxicity. Thus, realization of a cartridge for a methanol fuel cell having reduced size and weight and without leak at low cost involves difficulties, and further improvements are required.

Further, JP2004-127659A discloses a fuel storage object for fuel cell. JP 01-278344 A discloses a plastic multilayer container.

[Disclosure of the Invention]

[Problem to be solved by the Invention]

Therefore, an object of the present invention is to provide a cartridge for a methanol fuel cell having reduced size and weight which is to be suitably used for a fuel tank or a refill container for DMFC and which has excellent methanol or oxygen permeation-preventing performance (barrier properties) at low cost.

[Means for solving the Problem]

The present invention relates to a cartridge for a methanol fuel cell according to claim 1. Further beneficial developments are set fort in the dependent claims.

[Effects of the Invention]

According to the present invention, a cartridge for a methanol fuel cell having reduced size and weight which is to be suitably used for a fuel tank or a refill container for DMFC and which has excellent methanol or oxygen permeation-preventing performance (barrier properties) can be obtained at low cost.

[Brief Description of the Drawings]

[Fig. 1] Fig. 1 is a schematic diagram showing an example of a microwave plasma treatment device used for forming an inorganic coating film on an inner surface of a hollow container.

[Fig. 2] A partially enlarged view of a main part of the device of Fig. 1.

[Description of Reference Numerals]

1    plasma treatment chamber
2    vacuum pump
3    discharge pipe

| | |
|---|---|
| 4 | microwave generator |
| 5 | waveguide |
| 6 | tuner |
| 8 | bottle |
| 9 | treatment gas introduction pipe |
| 10 | antenna |

[Best Mode for carrying out the Invention]

A methanol vapor permeability coefficient of a methanol impermeable layer and an oxygen permeability coefficient of a gas barrier layer in a cartridge for a methanol fuel cell of the present invention were measured as described below.

(Production of resin film)

A resin was preheated at a temperature of a melting point of a resin +20°C for 7 minutes, pressed at a pressure of 100 kg/cm$^2$ for 1 minute, and pressured under cooling at a temperature of 20 °C and pressure of 150 kg/cm$^2$ for 2 minutes, to thereby produce a press film having a thickness of 120 $\mu$m.

(Method of measuring methanol vapor permeability coefficient of methanol impermeable resin)

The methanol vapor permeability coefficient (P(MeOH); $\mu$g·mm/m$^2$·hr) was measured at a measurement temperature 40°C by using the press film obtained by the method described above in accordance with "Test Method for Water Vapor Transmission Rate Through Plastic Film and Sheeting Using a Modulated Infrared Sensor (ASTM F1249) ". Methanol of special grade available from Wako Pure Chemical Industries, Ltd. was used, and MAS-2000 (manufactured by MAS Technologies, Inc.) was used as a measuring device.

(Method of measuring oxygen permeability coefficient of resin used for gas barrier layer)

The oxygen permeability coefficient (P(O$_2$); cc·cm/cm$^2$·sec·cmHg) at a measurement temperature of 23°C and 60% RH was measured by using the press film obtained by the method described above in accordance with " Determination of gas-transmission rate of a Plastics-Film and sheeting (JIS K7126 B(Equal-pressure method))". An oxygen permeability coefficient measuring device (OX-TRAN 2/20: manufactured by MOCON, Inc.) was used as a measuring device.

The cartridge for a methanol fuel cell of the present invention is characterized in that at least one methanol impermeable layer having a methanol vapor permeability coefficient of 15 $\mu$g·mm/m$^2$·hr or less at 40°C is comprised. A material used for forming the methanol impermeable layer is a cyclic olefin-based resin. This resin may be used unoriented, or may arbitrarily be uniaxially oriented or biaxially oriented.

A cyclic olefin-based polymer (COP) or a copolymer of ethylene and a cyclic olefin (COC: cycloolefin copolymer), known as a material used for forming a bottle, can be used as the cyclic olefin-based resin. COC includes a copolymer substantially and entirely formed of COC and a copolymer blended with other polyolefins .

A non-crystalline or low-crystalline copolymer produced from 10 to 50 mol%, in particular, 20 to 48 mol% of a cyclic olefin and the balance of ethylene and having a glass transition point of 5 to 200 °C, in particular, 40 to 190°C is preferably used as COC. Further, a copolymer obtained by substituting a part of ethylene forming a copolymer with a cyclic olefin by another $\alpha$-olefin having about 3 to 20 carbon atoms such as propylene, 1-butene, 1-pentene, 1-hexene, 1-octene, 3-methyl-1-pentene, or 1-decene may be used.

An alicyclic hydrocarbon compound having an ethylenic unsaturated bond and a bicyclo ring is preferred as the cyclic olefin. Examples of a cyclic olefin forming a repeating unit with a norbornane structure include: 8-ethyl-tetracyclo[4.4.0.1.2,5.12,5.17,10]-dodeca-3-ene; 8-ethylidene-tetracyclo[4.4.0.1.2,5.17,10]-dodeca-3-ene; and 8-methyl-tetracyclo[4.4.0.1.2,5.17,10]-dodeca-3-ene. Examples of a cyclic polyolefin forming a repeating unit without norbornane structure include: 5-ethylidene-bicyclo[2,2,1]hepto-2-ene; 5-ethyl-bicyclo[2,2,1]hepto-2-ene; and tetracyclo[7.4.0.02,7.110,13]-trideca-2,4,6,11-tetraene.

Resins each having an inorganic coating film may be used as another material used for forming a further methanol impermeable layer of the cartridge for a methanol fuel cell of the present invention. Examples of the inorganic coating film include: various carbon coating films such as a diamond-like carbon coating film and amodified carbon coating film; a titanium oxide coating film; a silicon oxide (silica) coating film; an aluminum oxide (alumina) coating film; a ceramics coating film; a silicon carbide coating film: and a silicon nitride coating film. Resins having those coating films formed on respective surfaces are not particularly limited, and any of thermoplastic resins to be generally used for producing plastic containers may be used.

Preferred examples of a resin having an inorganic coating film for improving methanol impermeable performance include a silica vapor deposited polyester film, an alumina vapor deposited polyester film, a silica vapor deposited nylon film, an alumina vapor deposited nylon film, an alumina vapor deposited polypropylene film, a carbon film vapor deposited polyester film, a carbon film vapor deposited nylon film, and a co-vapor deposited film prepared through co-vapor deposition of alumina and silica on a base film such as a polyester filmor a nylon film. However, the resin is not limited to the examples described above. Other materials may also be used as long as the requirement defined by the present invention, that is, a methanol vapor permeability coefficient of 15 $\mu$g·mm/m²·hr or less at 40°C is satisfied.

A resin layer having an inorganic coating film formed on a film-like or sheet-like resin surface in advance through chemical vapor deposition, plasma vapor deposition, sputtering, or the like may be used as a resin layer having an inorganic coating film. For example, a film or sheet having an inorganic coating film obtained as described above is laminated with another resin film having heat sealing property, and then heat sealed with a heat sealing resin layer on an inner surface, to thereby produce a pouch-like container.

Further, a hollow container may be produced from a resin material in advance through injection molding, blow molding, or the like, and then an inorganic coating film may be formed on an inner surface of the obtained container through plasma vapor deposition or the like.

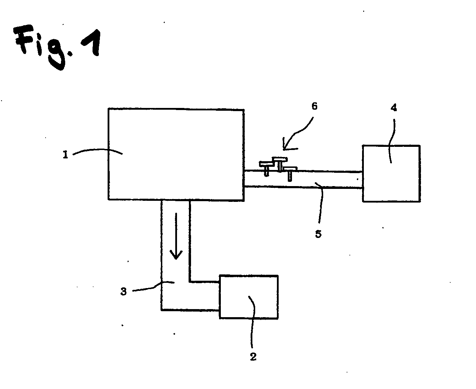

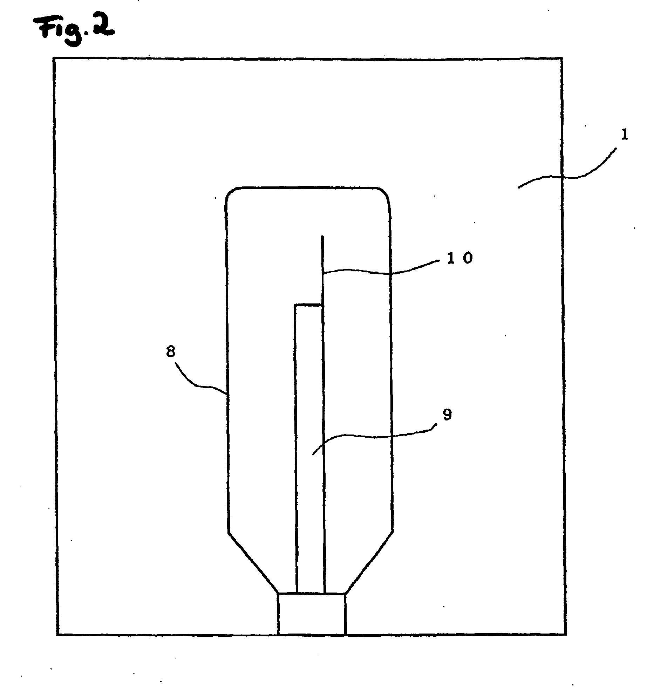

Fig. 1 and Fig. 2 are each a schematic diagram showing an example of a microwave plasma treatment device used for forming an inorganic coating film on an inner surface of a hollow container. Fig. 1 is a schematic diagram showing a structure of the entire device, and Fig. 2 is a partially enlarged view of a main part of the plasma treatment chamber.

The plasma treatment device is constructed of a plasma treatment chamber 1, a vacuum pump 2 connected to the plasma treatment chamber 1 through a discharge pipe 3, and a microwave generator 4 connected to the plasma treatment chamber 1 through a waveguide 5. The waveguide 5 is provided with three tuners 6 for adjusting a microwave reflection amount from the treatment chamber 1 to minimum, and a short plunger (not shown) for minimizing a load of the treatment chamber is provided in the plasma treatment chamber 1.

A bottle 8 to be treated is attached in an inverted state to a bottle holder (not shown) provided in the plasma treatment chamber 1. A treatment gas introduction pipe 9 having a metallic antenna 10 at its end is arranged inside the bottle 8.

In plasma treatment, the bottle 8 and the bottle holder are maintained airtight, and inside of the bottle 8 is maintained under vacuum by operating the vacuum pump 2. During the treatment, inside of the plasma treatment chamber 1 on an outside of the bottle 8 may be under reduced pressure for preventing deformation of the bottle 8 due to external pressure. A level of reduced pressure inside the bottle 8 is at a level allowing glow discharge upon introduction of a treatment gas and microwaves. Meanwhile, a level of reduced pressure inside the plasma treatment chamber 1 is at a level allowing no glow discharge upon introduction of microwaves.

A treatment gas is introduced into the bottle 8 through the treatment gas introduction pipe 9 under such reduced pressure, and microwaves are introduced into the plasma treatment chamber 1 from the microwave generator 4 through the waveguide 5. At this time, plasma generates stably in a very short period of time through glow discharge due to electron emission from the metallic antenna 10. Note that the treatment gas introduction pipe 9 is formed of a metallic pipe such that the treatment gas introduction pipe 9 also serves as an antenna. Further, a linear or foil-like metallic antenna may be attached to an outer side of the metallic pipe (extending direction of the pipe) such that an entire pipe may serve as an antenna.

For formation of a uniform chemically vapor deposited film on an inner surface of the bottle, the treatment gas introduction pipe 9 is preferably formed of a porous metal, or a porous body formed of ceramics or plastic. In the case where the treatment gas introduction pipe 9 is formed of such a material, a methanol impermeable chemically vapor deposited film having a uniform thickness and excellent flexibility can be formed efficiently on an inner surface of the bottle. An electron temperature in the plasma is several ten thousands K. Meanwhile, a temperature of gas particles is several hundreds K and in a state of thermal non-equilibrium. Thus, film formation through plasma treatment can be conducted effectively even on a surface of a plastic container at low temperatures.

After predetermined plasma treatment on the bottle 8, introduction of the treatment gas and microwaves are stopped. At the same time, air is gradually introduced through the discharge pipe 3, to thereby return the inside and outside of the bottle 8 to normal pressure. Then, the bottle 8 having the chemically vapor deposited film formed on the inner surface through the plasma treatment is taken out of the plasma treatment chamber 1.

The cartridge for a methanol fuel cell of the present invention has such a feature in that at least one methanol impermeable layer having a methanol vapor permeability coefficient of 15 $\mu$g·mm/m²·hr or less at 40°C is comprised. Thus, the cartridge may be a container having a monolayer structure formed of a methanol impermeable layer alone. The cartridge may be a container having a multilayer structure comprising a methanol impermeable layer and another layer, and may have a structure comprising two or more methanol impermeable layers.

In the case where the cartridge for a methanol fuel cell is a container having a multilayer structure, the container preferably comprises a gas barrier layer having an oxygen permeability coefficient of $1.0 \times 10^{-10}$ cc·cm/cm$^2$·sec·cmHg or less measured at 23°C and 60 %RH.

Such a gas barrier layer may be formed as a resin layer having gas barrier property, a resin layer having oxygen absorbing property, a metal foil layer formed of aluminum, or the like, and preferably serves as an intermediate layer of the container having a multilayer structure.

A preferred example of a material used for forming an intermediate layer formed of a gas barrier resin is a saponified ethylene/vinyl acetate copolymer having an ethylene content of 20 to 50 mol% and a saponification degree of 97 mol% or more. In particular, a material having MFR of 3.0 to 15.0 g/10 minutes measured at 210°C is preferably used.

Other examples of the gas barrier resin used for forming an intermediate layer include: polyamides each having 3 to 30 amide groups, in particular, 4 to 25 amide groups per 100 carbon atoms; polyamides each having an aromatic ring; a cyclic olefin copolymer resin; polyacrylonitrile; and a high-density aliphatic polyester having a density of 1. 5 or more such as a polyglycolic acid copolymer.

One kind of gas barrier resin may be used alone, or two or more kinds thereof may be blended and used. Further, another thermoplastic resin may be blended into the gas barrier resin within a range not inhibiting its properties.

Various known barrier filmsmaybe used as the gas barrier resin. Examples of such barrier films include: a silica vapor deposited polyester film, an alumina vapor deposited polyester film, a silica vapor deposited nylon film, an alumina vapor deposited nylon film, an alumina vapor deposited polypropylene film, a carbon film vapor deposited polyester film, a carbon film vapor deposited nylon film; a co-vapor deposited film prepared through co-vapor deposition of alumina and silica on a base film such as a polyester film or a nylon film; a co-extruded film such as a nylon 6/metaxylene diamine nylon 6 co-extruded film or a propylene/ethylene vinyl alcohol copolymer co-extruded film; an organic resin-coated film such as a polyvinyl alcohol-coated polypropylene film, a polyvinyl alcohol-coated polyester film, a polyvinyl alcohol-coated nylon film, a polyacrylic resin-coated polyester film, a polyacrylic resin-coated nylon film, a polyacrylic resin-coated polypropylene film, a polyglycolic acid resin-coated polyester film, a polyglycolic acid resin-coated nylon film, or a polyglycolic acid resin-coated polypropylene film; and a film prepared by coating a hybrid coating material formed of an organic resin material and an inorganic material on a base film such as a polyester film, a nylon film, or a polypropylene film. One kind of barrier film may be used alone, or two or more kinds thereof may be used in combination.

A resin used for forming an oxygen absorbable resin layer of the cartridge for a methanol fuel cell of the present invention may employ (1) a resin having oxygen absorbing property itself or (2) a resin composition containing an oxygen absorber in a thermoplastic resin having or not having oxygen absorbing property. The thermoplastic resin used for forming the oxygen absorbable resin composition (2) is not particularly limited, and a thermoplastic resin having oxygen barrier property or a thermoplastic resin having no oxygen barrier property may be used. Use of a resin having oxygen absorbing property or oxygen barrier property itself for the thermoplastic resin used for forming the resin composition (2) is preferred because permeation of oxygen into the container may be effectively prevented by combination with an oxygen absorbing effect of the oxygen absorber.

An example of the resin having oxygen absorbing property itself is a resin utilizing an oxidation reaction of the resin. Examples of such a material include an oxidative organic material such as polybutadiene, polyisoprene, polypropylene, an ethylene/carbon monoxide copolymer; or polyamides such as 6-nylon, 12-nylon, or metaxylene diamine (MX) nylon having organic acid salts each containing a transition metal such as cobalt, rhodium, or copper as an oxidation catalyst or a photosensitizer such as benzophenone, acetophenone, or chloroketones added. In the case where the oxygen absorbing material is used, high energy rays such as UV rays or electron rays may be emitted, to thereby develop further effects.

All oxygen absorbers conventionally used for such applications can be used as an oxygen absorber to be mixed into a thermoplastic resin, but a preferred oxygen absorber is generally reductive and substantially insoluble in water. Appropriate examples thereof include: metal powder having reducing power such as reductive iron, reductive zinc, or reductive tin powder; a lower metal oxide such as $FeO$ or $Fe_3O_4$; and a reductive metal compound containing as a main component one or two or more kinds of iron carbide, ferrosilicon, iron carbonyl, and iron hydroxide in combination. An example of a particularly preferred oxygen absorber is reductive iron such as reductive iron obtained by reducing iron oxide obtained in a production process of steel, pulverizing produced sponge iron, and conducting finish reduction in a hydrogen gas or a decomposed ammonia gas. Another example thereof is reductive iron obtained by electrolytically depositing iron from an aqueous solution of iron chloride obtained in a pickling step during steel production, pulverizing the resultant, and conducting finish reduction.

As required, the oxygen absorber may be used in combination with: an oxidation accelerator formed of an electrolyte such as a hydroxide, carbonate, sulfite, thiosulfate, tribasic phosphate, dibasic phosphate, organic acid salt, or halide of an alkali metal or alkali earth metal; and an assistant such as active carbon, active alumina, or active clay. Particularly preferred examples of the oxygen accelerator include sodium chloride, calcium chloride, and a combination thereof.

In the case where reductive iron and the oxidation accelerator are used in combination, a mixing amount thereof is preferably 99 to 80 parts by weight of reductive iron and 1 to 20 parts by weight of oxidation accelerator, in particular, 98 to 90 parts by weight of reductive iron and 2 to 10 parts by weight of oxidation accelerator with respect to 100 parts by weight in total.

Another example of the oxygen absorber is a polymer compound having a polyhydric phenol in a skeleton such as a phenol/aldehyde resin containing a polyhydric phenol. Further, ascorbic acid, erysorbic acid, tocopherols, and salts thereof which are water-soluble substances may appropriately be used. Of oxygen absorbable substances, reductive iron and an ascorbic acid-based compound are particularly preferred.

Further, a thermoplastic resin may contain the resin having oxygen absorbing property itself as an oxygen absorber.

The oxygen absorber preferably has an average particle size of generally 50 $\mu$m or less, and particularly preferably 30 $\mu$m or less. In the case where the cartridge requires transparency or translucency, an oxygen absorber having an average particle size of preferably 10 $\mu$m or less, and particularly preferably 5 $\mu$m or less is used. The oxygen absorber is preferably mixed into the resin in a ratio of preferably 1 to 70 wt%, and particularly preferably 5 to 30 wt%.

An oxygen absorbable resin layer may be formed as a gas barrier layer of a container having a multilayer structure. Alternatively, another gas barrier layer may be provided in the container, and then an oxygen absorbable resin layer may be formed.

A metal foil of aluminum, tin, copper, iron, or the like may be used as another material used for forming the gas barrier layer.

In the case where the cartridge for a methanol fuel cell of the present invention has a multilayer structure, resins each formed of a thermoplastic resin having or not having heat sealing property may be used as a material used for forming an inner layer, an outer layer, or the like of the container.

Examples of such a thermoplastic resin include: polyolefins such as crystalline polypropylene, a crystalline propylene/ethylene copolymer, crystalline polybutene-1, crystalline poly4-methylpentene-1, low-, medium-, or high-density polyethylene, an ethylene/vinyl acetate copolymer (EVA),a saponified EVA, an ethylene/ethyl acrylate copolymer (EEA), and an ion crosslinked olefin copolymer (ionomer); an aromatic vinyl copolymer such as polystyrene or a styrene/butadiene copolymer; a halogenated vinyl polymer such as polyvinyl chloride or a vinylidene chloride resin; a polyacrylic resin; a nitrile polymer such as an acrylonitrile/styrene copolymer or an acrylonitrile/styrene/butadiene copolymer; polyesters such as polyethylene terephthalate and polytetramethylene terephthalate; various polycarbonates; a fluorine-based resin; and polyacetals such as polyoxymethylene. One kind of thermoplastic resin may be used alone, or two or more kinds thereof may be blended and used. Further, the thermoplastic resin may be used by mixing various additives.

An adhesive resin is disposed between layers of the container having a multilayer structure as required. Such an adhesive resin is not particularly limited, and any of a polyurethane-based resin, an acid-modified ethylene/$\alpha$-olefin copolymer, a vinyl acetate-based resin, and the like generally used for production of a plastic container may be used.

A resin obtained through graft modification of an ethylene/$\alpha$-olefin copolymer prepared through copolymerization of ethylene, and an $\alpha$-olefin having 10 or less carbon atoms such as propylene, 1-butene, 1-pentene, 1-heptene, or 1-octene with an unsaturated carboxylic acid such as acrylic acid, methacrylic acid, maleic acid, fumaric acid, itaconic acid, or crotonic acid or an anhydride thereof is preferably used as the acid-modified ethylene/$\alpha$-olefin copolymer. A graft modification rate of the adhesive resin is preferably about 0.05 to 5 wt%. One kind of acid-modified ethylene/$\alpha$-olefin copolymer may be used alone, or two or more kinds thereof may be mixed and used. Further, an ethylene/$\alpha$-olefin copolymer modified with an acid in high concentration in advance, and a polyolefin-based resin such as unmodified low-density polyethylene, an ethylene/vinyl acetate copolymer, an ethylene/$\alpha$-olefin copolymer, or high-density polyethylene may be mixed, and the thus-obtained blend product adjusted to have an acid modification rate of about 0.05 to 5 wt% as a resin may be used as an adhesive resin.

The resin layer used for forming the cartridge for a methanol fuel cell of the present invention may contain an additive such as a lubricant formed of a higher fatty amide such as amide oleate, amide stearate, amide erucate, or amide behenate; a crystalline nucleating agent generally added to a plastic container; a UV absorber; an antistatic agent; a colorant such as a pigment; an antioxidant; or a neutralizer mixed.

A shape of the cartridge for a methanol fuel cell of the present invention is not limited, and the cartridge may have various shapes including a hollow container such as a bottle, a cartridge, or a cup; a flat pouch, and a standing pouch. A method of producing a container may employ a general method. For example, the hollow container such as a bottle, a cartridge, or a cup may be produced by a method including injection molding, blow molding such as direct blow or biaxial stretch blow molding, or vacuum/pressure forming, but biaxial stretch blow molding is preferably employed. The pouches such as a flat pouch and a standing pouch can be produced by heat sealing a multilayer film having a heat sealing resin layer as an innermost layer. Those containers are each preferably provided with means for forming a pouring portion such as a screw cap or a spout. Further, the pouring portion of the cartridge for a methanol fuel cell is particularly preferably provided with a valve mechanism for preventing leak.

Dimensions of the cartridge for a methanol fuel cell of the present invention are not particularly limited. In the case where the cartridge is used for a fuel tank or a refill container for DMFC to be used as a power source for a laptop computer, a cell phone, or the like, a content volume is preferably 1 to 500 ml, and particularly preferably about 10 to 200 ml.

The cartridge for a methanol fuel cell of the present invention can be produced as a container having a monolayer or multilayer structure. The obtained container may be installed in an outer case formed of a rigidmaterial. In the case where a synthetic resin is used as a rigid material appropriate for forming the outer case, one kind of synthetic resin material such as an acrylonitrile/butadiene/styrene resin (ABS), polystyrene (PS), an acrylonitrile/styrene resin (AS), polyethylene terephthalate (PET), polybutylene terephthalate (PBT), polyethylene naphthalate (PEN), polylactic acid (PLA), polyglycolic acid (PGA), polycarbonate (PC), polypropylene (PP), polyethylene (PE), a cyclic polyolefin (COC), polyacetal (POM), polymethyl methacrylate (PMMA), a modified polyphenylene ether (PPE), polyphenylene sulfide (PPS), polysulfone (PSF), polyether sulfone (PES), or a liquid crystal polymer (LCP) may be used alone, or two or more kinds thereof may be blended and used. Alternatively, a composite material containing a glass fiber or a filler such as talc mixed as required may be molded into a predetermined shape through injection molding or the like, to thereby form an outer case. In addition, the outer case may be formed of a metal.

In the case where the container to be used as the cartridge for a methanol fuel cell of the present invention has a multilayer structure, preferred examples of a layer structure include in the order given from an inner layer of the container: cyclic olefin-based resin (COC)/adhesive resin (Ad)/polyolefin resin (PO); COC/Ad/PO+regnerated resin (Reg); COC/Ad/PO+Reg/Ad/COC; PO/Ad/COC/Ad/PO; PO/Ad/COC/Ad/PO+Reg; COC/Ad/PO+Reg(Ad)/PO; PO/Ad/COC/Ad/PO+Reg/PO; COC/Ad1/saponified ethylene vinyl acetate copolymer(EVOH)/Ad2/PO+Reg/PO; and PO/Ad/COC/Adl/EVOH/Ad2/PO+Reg/PO.

[Examples]

Hereinafter, the present invention will be described in more detail by way of examples, but the present invention is not limited to the following specific examples.

(Example 1)

As a resin used for forming a container, an ethylene/tetracyclodecene copolymer (ethylene content of 74 mol%) which is COC having P(MeOH) of 0.95 $\mu$g·mm/m$^2$·hr and MFR of 30 g/10 min at 260 °C was used. This resin was subjected to injection molding at an injection resin temperature of 200°C, an injection resin pressure of 100 MPa, and a mold temperature of 40°C by using an injection molding machine UH-1000 manufactured by Nissei Plastic Industrial Co., Ltd., to thereby obtain a monolayer screw bottle (thickness: 0.5 mm) having a full content volume of 60 ml and a mass of 10 g.

(Example 2) (Reference Example)

A monolayer screw bottle was obtained through injection molding in the same manner as in Example 1 except that polyethylene terephthalate (PET) having P(MeOH) of 1.3 $\mu$g·mm/m$^2$·hr, a density of 1.41 g/cm$^3$, a melting point of 252°C, and an intrinsic viscosity (IV) of 0.78 dl/g was used as a resin used for forming a container.

(Example 3) (Reference Example)

A monolayer screw bottle was obtained through injection molding in the same manner as in Example 1 except that polyethylene napthalate (PEN) having P(MeOH) of 0.16 $\mu$g·mm/m$^2$·hr, a density of 1.33 g/cm$^3$, and a melting point of 265°C was used as a resin used for forming a container.

(Example 4) (Reference Example)

A monolayer screw bottle was obtained through injection molding in the same manner as in Example 1 except that polylactic acid (PLA) having P(MeOH) of 14 $\mu$g·mm/m$^2$·hr, a density of 1.26 g/cm$^3$, a melting point of 172°C, and MFR of 10.7 g/10 min at 190°C was used as a resin used for forming a container.

(Example 5) (Reference Example)

High-density polyethylene (HDPE) having P(MeOH) of 1.9 ug·mm/m$^2$·hr, a density of 0.945 g/cm$^3$, a melting point of 130°C, and MFR of 0.35 g/10 min at 190°C was used as a resin used for forming a container. A parison obtained through extrusion of HDPE by a conventional method by using a monolayer die was subjected to direct blow molding with a rotary blow molding machine, to thereby produce a monolayer screw bottle having a full content volume of 60 ml and a mass of 10 g.

(Example 6)

A parison having a three-layer structure of three different layers was produced through co-extrusion by a conventional method by using multiple multilayer dies. The parison was subjected to direct blow molding with a rotary blow molding machine, to thereby produce a multilayer blow bottle having a three-layer structure of three different layers of COC (thickness: 50 $\mu$m) /Ad (thickness: 10 $\mu$m) /PO+Reg (thickness: 440 $\mu$m) in the order given from an inner layer and having a full content volume of 60 ml and a mass of 10 g.
Maleic anhydride-modified polyethylene having 60 meq/100 g of carbonyl groups was used as Ad. Low-density polyethylene (LDPE) having MFR of 1.0 g/10 min at 190°C and a density of 0.920 g/cm$^3$ was used as PO. An ethylene tetracyclododecene copolymer (ethylene content of 78 mol%) having P(MeOH) of 1.2 ug·mm/m$^2$·hr and MFR of 15 g/10 min at 260°C was used as COC.

(Example 7)

A parison having a five-layer structure of four different layers was produced in the same manner as in Example 6. The parison was subjected to direct blow molding with a rotary blow molding machine, to thereby produce a multilayer blow bottle having a five-layer structure of four different layers of HDPE (thickness: 90 $\mu$m) /Ad (thickness: 30 $\mu$m) /COC (thickness: 150 $\mu$m)/Ad (thickness: 40 $\mu$m) /PP+Reg (thickness: 190 $\mu$m) in the order given from an inner layer and having a full content volume of 60 ml and a mass of 10 g.
Maleic anhydride-modified polypropylene having 60 meq/100 g of carbonyl groups was used as Ad. An ethylene/propylene block copolymer (block PP) having MFR of 1. 4 g/10 min at 230 °C and a density of 0.9 g/cm$^3$ was used as PP. COC used in Example 6 was used as COC. HDPE used in Example 5 was used as HDPE.

(Example 8) (Reference Example)

A preform was obtained from PET used in Example 2 through injection molding by a conventional method. This preform was subjected to biaxial stretch blow molding at 2.5 times in a longitudinal direction and 3.5 times in a lateral direction with a biaxial stretch blow molding machine (Nissei ASB-50H, manufactured by NISSEI ASB MACHINE CO., LTD.), to thereby produce a monolayer bottle having a full content volume of 60 ml, a mass of 10 g, and an average thickness of 0.5 mm.

(Example 9) (Reference Example)

A monolayer bottle was produced in the same manner as in Example 8 except that PEN used in Example 3 was used as a resin used for forming a bottle.

(Example 10) (Reference Example)

A monolayer bottle was produced in the same manner as in Example 8 except that PLA used in Example 4 was used as a resin used for forming a bottle.

(Example 11) (Reference Example)

A sheet having a thickness of 1.0 mm produced through melt molding of PET used in Example 2 by a conventional method was subj ected to heat molding, to thereby produce a cup container having a thickness of 0.3 mm.

(Example 12) (Reference Example)

An unoriented polypropylene film (product name: 2K93K, available fromToray Plastic Films Co. , Ltd.) forming an inner sealant layer and having a thickness of 70 $\mu$m, and a polyester film (product name: Ester Film E5000, available from Toyobo Co., Ltd.) forming an outer layer, obtained through biaxial orientation of PET having P(MeOH) of 1.3 ug·mm/m$^2$·hr, and having a thickness of 50 $\mu$m were subjected to dry lamination through a polyester-based urethane adhesive (product name: TM-593, available from Toyo-Morton, Ltd.) (thickness of 3 $\mu$m), to thereby obtain a multilayer film having a bilayer structure.
Inner sealant layers of the obtained multilayer film were arranged to oppose each other, and peripheral parts were heat sealed, to thereby form a flat pouch sealed on three sides. A spout obtained through injection molding of random polypropylene was heat sealed on an upper part of the pouch, to thereby produce a spout-attached flat pouch having a full content volume of 60 ml and a surface area of 90 cm$^2$.

(Comparative Example 1)

A monolayer screw bottle was obtained through injection molding in the same manner as in Example 1 except that random polypropylene having P(MeOH) of 40 $\mu$g·mm/mm$^2$·hr, a density of 0.91 g/cm$^3$, and MFR of 20 g/10 min at 230 °c was used as a resin used for forming a container.
Methanol permeability of each of the containers obtained in Examples 1 to 12 and Comparative Example 1 was measured as described below, and Table 1 shows the results.

(Method of measuring methanol permeability of container)

The container to be measured was filled with 50 cc of methanol (Wako Pure Chemical Industries, Ltd., special grade). A cap material containing an aluminum foil was bonded to the bottle and the cup for sealing. The pouch was filled with methanol and then heat sealed for sealing.
A weight of the container filled with methanol was measured, and the container was stored in a constant temperature tank at 40°C. The container was taken out of the constant temperature tank after three weeks and weighed, and a weight reduction rate (%) was calculated from the following equation, to thereby determine a methanol permeation amount.

$$\text{Methanol permeability } (\mu g/\text{container·day}) = \{\text{Initial weight (g)} - \text{Weight after storage (g)}\} \times 10^6/21 \text{ days}$$

[Table 1]

|  | Layer structure | Molding method | Methanol permeability coefficient | Methanol permeability |
|---|---|---|---|---|
| Example 1 | COC monolayer | Injection molding | 0.95 | 0.4 |
| Example 2 * | PET monolayer | Injection molding | 1.3 | 0.5 |
| Example 3 * | PEN monolayer | Injection molding | 0.16 | 0.07 |
| Example 4 * | PLA monolayer | Injection molding | 14 | 6 |
| Example 5 * | HDPE monolayer | Direct blow | 1.9 | 0.9 |
| Example 6 | Three-layer of three different layers | Direct blow | 1.2 | 5 |
| Example 7 | Five-layer of four different layers | Direct blow | 0.95 | 0.7 |
| Example 8 * | PET monolayer | Biaxial stretch blow | 1.3 | 0.2 |
| Example 9 * | PEN monolayer | stretch blow | 0.16 | 0.02 |
| Example 10 * | PLA monolayer | Biaxial stretch blow | 14 | 2 |
| Example 11 * | PET monolayer | Vacuum pressure molding | 1.3 | 0.3 |
| Example 12 * | Bilayer | Sealed three sides | on 1.3 | 2.0 |
| Comparative example 1 | PP monolayer | Injection molding | 17 | 17 |

Methanol permeability coefficient :$\mu$g·mm/m$^2$·hr (40°C)
Methanol permeability : $\mu$g/ container.day (40°C, 90cm$^2$)
* Reference Example

In the following Examples 13 and 14, a cartridge for a methanol fuel cell having a multilayer structure comprising a methanol impermeable layer and a gas barrier layer was produced. The gas barrier layer was formed of a saponified ethylene/vinyl acetate copolymer (EVOH: ethylene content of 32 mol%) having P(O$_2$) of 1.2$\times$10$^{-14}$ cc·cm/cm$^2$·sec·cmHg, a density of 1.19 g/cm$^3$, and MFR of 1.3 g/10 min at 190°C.

(Example 13)

A multilayer blow bottle having a six-layer structure of five different layers of COC (thickness: 50 $\mu$m) /Ad (thickness: 10 $\mu$m) /EVOH (thickness: 20 $\mu$m)/Ad (thickness: 10 $\mu$m)/PO+Reg (thickness: 260 $\mu$m) /PO (thickness: 150 $\mu$m) in the order given from an inner layer and having a full content volume of 60 ml and a mass of 10 g was produced in the same manner as in Example 6.

(Example 14)

Linear low-density polyethylene (LLDPE) having a density of 0.920 g/cm$^3$ was used as a resin used for forming an inner sealant layer. COC used in Example 1 was used as a resin used for forming a methanol impermeable layer. EVOH was used as a resin used for forming a gas barrier layer. An adhesive polyolefin resin (product name: Admer NF528, available from Mitsui Chemicals, Inc.) was used as an adhesive (Ad) to be disposed between the resin layers. Amultilayer film having a layer structure of LLDPE (thickness: 100 $\mu$m) /Ad (thickness: 5 $\mu$m) /COC (thickness: 20 $\mu$m) /Ad (thickness: 5 $\mu$m)/ EVOH (thickness: 20 $\mu$m) in the order given from an inner layer was obtained through extrusion molding of the resins by using four extrusion machines and a multilayer die, and the resultant was cooled and rolled on a cooling roll. Then, a biaxially oriented polyester film (product name: Ester Film E5000, available fromToyobo Co., Ltd.) forming an outer layer and having a thickness of 50 $\mu$m was dry laminated on the EVOH layer of this multilayer film through the polyester-based urethane adhesive (thickness: 3 $\mu$m) used in Example 12, to thereby form a multilayer film used for forming a pouch.
Inner sealant layers of the obtained multilayer film were arranged to oppose each other, and peripheral parts were heat sealed, to thereby form a flat pouch sealed on three sides. A spout obtained through injection molding of LLDPE was heat sealed on an upper part of the pouch, to thereby produce a spout-attached flat pouch having a full content volume of 60 ml and a surface area of 90 cm$^2$.
In the following example, a cartridge for a methanol fuel cell including an aluminum foil serving as a methanol impermeable layer and a gas barrier layer.

(Example 15: Retort pouch containing aluminum foil: thickness of 115 $\mu$m) (Reference Example)

On one side of the biaxially oriented polyester film (product name: Ester Film E5000, available from Toyobo Co., Ltd.) having a thickness of 12 $\mu$m and used in Reference Example 12, an aluminum foil (hereinafter, referred to as "A1") having a thickness of 9 $\mu$m was laminated by a dry lamination method through the polyester-based urethane adhesive (thickness of 3 $\mu$m) used in Reference Example 12, to thereby produce a laminated film.
Next, on an Al surface of the laminated film, a biaxially oriented nylon film (product name: Bonyl RX, available from Kohjin, Co., Ltd.) having a thickness of 15 $\mu$m and an unoriented polypropylene film (2K93K, available from Toray Plastic Films Co., Ltd.) having a thickness of 70 $\mu$m and used in Reference Example 12 were laminated sequentially by a dry lamination method, to thereby produce a multilayer film having a layer structure of 12 $\mu$m PET/urethane adhesive (3 $\mu$m) /9 $\mu$m aluminum foil/urethane adhesive (3 $\mu$m) /15 $\mu$m biaxially oriented nylon/urethane adhesive (3 $\mu$m)/70 $\mu$m polypropylene from an outer layer.
The multilayer film was sealed on three sides, to thereby produce a flat pouch. A spout obtained through injection molding of random polypropylene was heat sealed on an upper part of the pouch, to thereby produce a spout-attached flat pouch having a full content volume of 60 ml and a surface area of 90 cm$^2$.

(Example 16: Oxygen absorbable pouch: thickness of 130 $\mu$m) (Reference Example)

In this example, a cartridge for a methanol fuel cell provided with an oxygen absorbing layer inside an aluminum foil for further enhancing gas barrier property was produced.
A resin composition containing 80 wt% of an ethylene/polypropylene random copolymer resin having an ethylene content of 12 wt%, 10 wt% of linear low-density polyethylene having a density of 0.88, and 10 wt% of an oxygen absorber containing particulate reductive iron as a main component was used as a resin composition used for forming an oxygen absorbable resin layer.
A multilayer film of 30 $\mu$m polypropylene/25 $\mu$m oxygen absorbable resin layer/30 $\mu$m polypropylene was produced through co-extrusion by using three extrusion machines.
On a nylon surface of a multilayer film laminated through dry lamination in the same manner as in Reference Example 15 of 12 $\mu$m PET/urethane adhesive (3 $\mu$m) /9 $\mu$m aluminum foil/urethane adhesive (3 $\mu$m) /15 $\mu$m biaxially oriented nylon, the oxygen absorbable multilayer film produced as described above was dry laminated through the urethane adhesive (3 $\mu$m) used in Reference Example 12.
In this way, a multilayer film having a layer structure of 12 $\mu$m PET/urethane adhesive (3 $\mu$m)/9 $\mu$m aluminum foil/

urethane adhesive (3 $\mu$m)/15 $\mu$m biaxially oriented nylon/urethane adhesive (3 $\mu$m) /30 $\mu$m polypropylene/25 $\mu$m oxygen absorbable resin layer/30 $\mu$m polypropylene from an outer layer was produced.

The multilayer film was sealed on three sides, to thereby produce a flat pouch. A spout obtained through injection molding of random polypropylene was heat sealed on an upper part of the pouch, to thereby produce a spout-attached flat pouch having a full content volume of 60 ml and a surface area of 90 cm$^2$

(Example 17) (Reference Example)

A silicon oxide coating film was formed on an inner surface of the biaxially oriented blow bottle formed of a PET monolayer and obtained in Reference Example 8 through the following procedure by using a microwave plasma treatment device shown in Figs. 1 and 2.

To a bottle holder provided in the metallic cylindrical plasma treatment chamber 1 having a diameter of 300 mm and a height of 300 mm, the biaxially oriented blow bottle formed of a PET monolayer and obtained in Reference Example 8 was attached in an inverted state. In the bottle 8, the gas introduction pipe 9 formed of a metal sintered body having an outer diameter of 10 mm and a pore diameter of 120 $\mu$m and having an iron antenna 10 having a needle-like end and having a diameter of 0.5 mm and a length of 30 mm was arranged.

Next, the vacuum pump 2 was operated. A degree of vacuum outside the bottle in the treatment chamber 1 was maintained at 2 KPa, and the degree of vacuum inside the bottle was maintained at 2 Pa. 2 sccm of a hexamethyl disiloxane gas as a treatment gas, 20 sccm of oxygen, and 10 sccm of argon were introduced, and the degree of vacuum in the bottle was adjusted to 50 Pa. 0.2 Kw of electric waves were emitted from the microwave generator 4 for formation of plasma in the bottle, and plasma treatment was conducted for 10 seconds, to thereby form a silicon oxide coating film having a thickness of 10 nm on an inner surface of the bottle.

(Comparative Example 2)

A parison was produced through co-extrusion of PO used in Example 6, Ad, and EVOH used in Example 13 by a conventional method by using multiple multilayer dies. This parison was subjected to direct blow molding with a rotary blow molding machine, to thereby produce a multilayer blow bottle having a full content volume of 60 ml, a mass of 10 g, and the following layer structure. (Inner layer) PO (thickness: 50 $\mu$m)/PO+Reg (thickness: 260 $\mu$m)/Ad (thickness: 10 $\mu$m) /EVOH (thickness: 20 $\mu$m) /Ad (thickness: 10 $\mu$m) /PO (thickness: 150 $\mu$m) (Outer layer)

The methanol permeability coefficient and methanol permeability of each of the containers obtained in Examples 13 and 14 and Reference Examples 15 to 17 and Comparative Example 2 were measured in the same manner as that described above, and Table 2 shows the results. Further, the oxygen permeability of the container was measured as described below, and Table 2 shows the results.

(Method of measuring oxygen permeability of container)

1 cc of water was poured into the container to be measured, and a cap material containing an aluminum foil was bonded thereto in a nitrogen atmosphere for sealing. This container was stored in a constant temperature and constant humidity tank at 30°C and 80% RH. After storage for three weeks, an oxygen concentration in the bottle was measured by gas chromatography. The oxygen permeability ($Q(O_2$; cc/container·day)) was determined from the oxygen concentration.

$$Q(O_2) = [(C_1-C_0)/100] \times V$$

$C_1$: Oxygen concentration (%) in bottle after three weeks
$C_0$: Initial oxygen concentration (%) in bottle
$V$: Full content volume of bottle (cc)

[Table 2]

| | Layer structure | Molding method | Methanol impermeable layer | Gas barrier layer |
|---|---|---|---|---|

(continued)

|  | | | Methanol permeability coefficient | Methanolility permeability | Oxygen permeability coefficient | Oxygen permeability |
|---|---|---|---|---|---|---|
| Example 13 | Six-layer of five different layers | Direct blow | 1.2 | 5 | $1.2 \times 10^{-14}$ | $2.7 \times 10^{-3}$ |
| Example 14 | 6 layer | Sealed on three sides | 1.3 | 3 | $1.2 \times 10^{-14}$ | $2.7 \times 10^{-3}$ |
| Example 15* | 4 layer | Sealed on three sides | 0 | <0.01 | 0 | |
| Example 16* | 6 layer | Sealed on three sides Oxygen absorber | 0 | <0.01 | 0 | |
| Example 17* | PET monolayer Inorganic coating film coating film | Biaxial stretch blow CVD method | 1.3 | 0.08 | $3.9 \times 10^{-14}$ | $8.8 \times 10^{-3}$ |
| Comparative example 2 | Six-layer of four different layers | Direct blow | 40 | 20 | $1.2 \times 10^{-14}$ | $2.7 \times 10^{-3}$ |

Methanol permeability coefficient :$\mu$g·mm/m$^2$·hr (40°C)
Methanol permeability :$\mu$g/ container·day
Oxygen permeability coefficient :cc·cm/cm$^2$·sec·cmHg
Oxygen permeability :cc/container·day
* Reference Example

## Claims

1. A cartridge for a methanol fuel cell, comprising at least one methanol impermeable layer having a methanol vapor permeability coefficient of 15 $\mu$g·mm/m$^2$·hr or less at 40°C, wherein the methanol impermeable layer is formed of a cyclic olefin-based resin.

2. A cartridge for a methanol fuel cell according to claim 1, wherein the cartridge has a multilayer structure comprising an additional gas barrier layer having an oxygen permeability coefficient of $1.0 \times 10^{-10}$ cc·cm/cm$^2$·sec·cmHg or less measured at 23°C and 60 %RH.

3. A cartridge for a methanol fuel cell according to claim 1 or 2, wherein the cartridge has a multilayer structure comprising an oxygen absorbable resin layer.

4. A cartridge for a methanol fuel cell according to any one of claims 1 to 3, wherein the methanol impermeable layer is comprised as an innermost layer of the cartridge.

5. A cartridge for a methanol fuel cell according to any one of claims 1 to 4, wherein the cartridge is produced through blow molding or injection molding.

6. A cartridge for a methanol fuel cell according to any one of claims 1 to 4, wherein the cartridge is a pouch produced through heat sealing of a multilayer film comprising a heat sealing resin layer as an innermost layer.

7. A cartridge for a methanol fuel cell according to any one of claims 1 to 6, further comprising an outer case formed of a rigid material, wherein the cartridge is installed in the outer case.

**8.** A cartridge for a methanol fuel cell according to any one of claims 1 to 7, further comprising a valve mechanism at a pouring portion of the cartridge for a methanol fuel cell.

**Patentansprüche**

**1.** Kartusche für eine Methanolbrennstoffzelle, die zumindest eine Methanol-impermeable Schicht mit einem Methanoldampfdurchlässigkeitskoeffizienten von 15 μg·mm/m$^2$·hr oder weniger bei 40°C umfasst, wobei die Methanol-impermeable Schicht aus einem zyklischen Olefin-basierenden Harz gebildet ist.

**2.** Kartusche für eine Methanolbrennstoffzelle nach Anspruch 1, wobei die Kartusche eine Multischichtstruktur aufweist, die eine zusätzliche Gasbarriereschicht mit einem Sauerstoffdurchlässigkeitskoeffizienten von 1,0 ×10$^{-10}$ CC.cm/cm$^2$.sec.cmHg oder weniger, gemessen bei 23°C und 60 %RH, umfasst.

**3.** Kartusche für eine Methanolbrennstoffzelle nach Anspruch 1 oder 2, wobei die Kartusche eine Multischichtstruktur aufweist, die eine Sauerstoff-absorbierende Harzschicht umfasst.

**4.** Kartusche für eine Methanolbrennstoffzelle nach einem der Ansprüche 1 bis 3, wobei die Methanol-impermeable Schicht als eine innerste Schicht der Kartusche umfasst ist.

**5.** Kartusche für eine Methanolbrennstoffzelle nach einem der Ansprüche 1 bis 4, wobei die Kartusche durch Blasformen oder Spritzgießen hergestellt ist.

**6.** Kartusche für eine Methanolbrennstoffzelle nach einem der Ansprüche 1 bis 4, wobei die Kartusche eine Tasche ist, die durch Wärmeversiegelung eines Multischichtfilms, der eine Wärmeversieglungsharzschicht als eine innerste Schicht umfasst, hergestellt ist.

**7.** Kartusche für eine Methanolbrennstoffzelle nach einem der Ansprüche 1 bis 6, ferner umfassend einen äußeren Behälter, der aus einem rigiden Material gebildet ist, wobei die Kartusche in dem äußeren Behälter installiert ist.

**8.** Kartusche für eine Methanolbrennstoffzelle nach einem der Ansprüche 1 bis 7, ferner umfassend einen Ventilmechanismus an einem ausströmenden Teil der Kartusche für eine Methanolbrennstoffzelle.

**Revendications**

**1.** Cartouche pour une pile à combustible au méthanol, comprenant au moins une couche imperméable au méthanol ayant un coefficient de perméabilité à la vapeur de méthanol de 15 μg·mm/m$^2$·h ou moins à 40°C, dans laquelle la couche imperméable au méthanol est formée d'une résine à base d'oléfine cyclique.

**2.** Cartouche pour une pile à combustible au méthanol selon la revendication 1, dans laquelle la cartouche a une structure multicouche comprenant une couche additionnelle de barrière aux gaz ayant un coefficient de perméabilité à l'oxygène de 1,0x10$^{-10}$ cm$^3$·cm/cm$^2$·s·cm Hg ou moins mesuré à 23°C et 60% HR.

**3.** Cartouche pour une pile à combustible au méthanol selon la revendication 1 ou 2, dans laquelle la cartouche a une structure multicouche comprenant une couche de résine d'absorption d'oxygène.

**4.** Cartouche pour une pile à combustible au méthanol selon l'une quelconque des revendications 1 à 3, dans laquelle la couche imperméable au méthanol est comprise comme une couche la plus intérieure de la cartouche.

**5.** Cartouche pour une pile à combustible au méthanol selon l'une quelconque des revendications 1 à 4, dans laquelle la cartouche est produite par moulage par soufflage ou moulage par injection.

**6.** Cartouche pour une pile à combustible au méthanol selon l'une quelconque des revendications 1 à 4, dans laquelle la cartouche est une poche produite par scellage à la chaleur d'un film multicouche comprenant une couche de résine de scellage à la chaleur comme une couche la plus intérieure.

**7.** Cartouche pour une pile à combustible au méthanol selon l'une quelconque des revendications 1 à 6, comprenant en outre un boîtier externe formé d'un matériau rigide, dans laquelle la cartouche est installée dans le boîtier externe.

8. Cartouche pour une pile à combustible au méthanol selon l'une quelconque des revendications 1 à 7, comprenant en outre un mécanisme de valve au niveau d'une partie de déversement de la cartouche pour une pile à combustible au méthanol.

Fig. 1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004265872 A
- JP 2004259705 A
- JP 2004152741 A
- JP 2004155450 A
- JP 2004127659 A
- JP 1278344 A